# EUROPÄISCHE PATENTANMELDUNG

(11) **EP 0 821 883 A2**
(43) Veröffentlichungstag der Anmeldung: **04.02.1998**
(21) Anmeldenummer: 97112376.5
(22) Anmeldetag: 18.07.1997
(51) Int. Cl.: A23L 1/01, A47J 37/12

(54) **Verfahren und Vorrichtung zur themischen Behandlung von Lebensmitteln durch einem Nebel aus einem Fett/Öl und einem Inertgas**

(30) Priorität: 31.07.1996 DE 19630953
(71) Anmelder: Linde Aktiengesellschaft, 65189 Wiesbaden (DE)
(72) Erfinder: Grupa, Uwe, Dr., 85356 Freising (DE)
(74) Vertreter: Kasseckert, Rainer

(57) **Zusammenfassung**

Es wird ein Verfahren zur thermischen Behandlung, insbesondere zum Fritieren oder Braten, von Lebensmitteln (0) beschrieben, wobei die Lebensmittel (0) in einen Behandlungsraum (1) eingebracht und dort mit heißem Fett und/oder Öl in Kontakt gebracht werden. Um definierte Produkteigenschaften der Lebensmittel (0) herstellen zu können, wird vorgeschlagen, im Behandlungsraum (1) einen homogenen Nebel aus dem heißen Fett und/oder Öl und einem Inertgas oder Inertgasgemisch mittels Vernebelungseinrichtungen (5) zu erzeugen und das Lebensmittel (0)während der thermischen Behandlung in dem heißen Fett- und/oder Ölnebel zu halten.

## Beschreibung

Die Erfindung betrifft ein Verfahren zur thermischen Behandlung von Lebensmitteln wobei die Lebensmittel in einen Behandlungsraum eingebracht und dort mit heißem Fett und/oder Öl in Kontakt gebracht werden, sowie eine Vorrichtung zur Durchführung des Verfahrens.

Es ist bekannt, Lebensmittel in Fritiereinrichtungen oder Bratanlagen in einem heißen Fettbad zu erhitzen, um ein typisches Brat- oder Fritieraroma der Lebensmittel zu erreichen. Bei der thermischen Behandlung in einem Fettbad sind relativ große Fettmengen erforderlich, um den gewünschten Fritier- oder Bratengeschmack zu gewährleisten. Damit verbunden ist meistens eine deutliche Fettaufnahme der Lebensmittel. Daher weisen konventionell hergestellte Lebensmittelprodukte üblicherweise einen hohen Fettanteil auf. Viele produkttypische Eigenschaften werden zwar durch die bekannten Verfahren zum thermischen Garen summarisch erreicht können aber oft nicht separat oder gezielt eingestellt werden.

Wegen des hohen Fettgehalts der konventionell hergestellten Lebensmittelprodukte werden in jüngster Zeit vermehrt fettreduzierte Produkte nachgefragt. Üblicherweise wird bei diesen fettreduzierten Produkten der Fettgehalt entweder durch Fettentzug, z.B. mittels Extraktion, oder durch einfaches Übersprühen mit warmen Öl nach vorherigem Garen und nachfolgendem Abtropfen reduziert. Dabei entsteht oder bleibt der typische, charakteristische Geschmack nicht in vollem Umfang.

Der vorliegenden Erfindung liegt daher die Aufgabe zugrunde, ein Verfahren zur thermischen Behandlung von Lebensmitteln durch Kontakt mit heißem Fett und/oder Öl sowie eine Vorrichtung zur Durchführung des Verfahrens zur Verfügung zu stellen, mit denen die genannten Nachteile bisheriger Verfahren vermieden werden können.

Diese Aufgabe wird verfahrensseitig erfindungsgemäß dadurch gelöst, daß im Behandlungsraum ein homogener Nebel aus dem heißen Fett und/oder Öl und einem Inertgas oder Inertgasgemisch eingestellt wird und das Lebensmittel während der thermischen Behandlung in dem Nebel gehalten wird.

Der Erfindung liegt die Erkenntnis zugrunde, daß durch die Behandlung der Lebensmittel in einem homogenen, heißen Fett- und/oder Ölnebel eine gezielte Einstellung von Produkteigenschaften der Lebensmittel ermöglicht wird. Dadurch können einerseits Produkte mit Fritier- oder Bratengeschmack hergestellt werden, andererseits können auch völlig neue Produkte kreiert werden. Hierzu gehören z.B. Backwaren, Snacks, Gemüse, eiweißreiche Lebensmittel etc.. Durch die Aufrechterhaltung einer Inertgasatmosphäre im Behandlungsraum wird erst die Behandlung der Lebensmittel in dem heißen Fett- und/oder Ölnebel ermöglicht. Ansonsten würden zündfähige oder selbstzündende Luft- Fettnebelgemische entstehen.

Der heiße Nebel dient nicht nur zur Erzeugung des charakteristischen Fettüberzugs, sondern bewirkt ein thermisches Garen des Produkts und eine durch den Prozeß herbeigeführte Modifikation der Produktoberfläche.

Zudem ist der Fett- und/oder Ölnebel wesentlich feiner und homogener als einfach im Behandlungsraum versprühtes Fett und/oder Öl. Beim einfachen Versprühen von Öl oder Fett entstehen grobe Tropfen, die eine homogene Benetzung der Lebensmittel nicht zulassen. Im Gegensatz dazu ist erfindungsgemäß vorgesehen, im Behandlungsraum eine homogene, plasmaartige Öl- und/oder Fettatmosphäre zu erzeugen. Auf diese Weise wird die gesamte Oberfläche der in dieser Atmosphäre gehaltenen Lebensmittel homogen mit dem Öl und/oder Fett in Kontakt gebracht.

Bei der Vernebelung des Fetts und/oder Öls muß darauf geachtet werden, daß im Behandlungsraum ein homogenes Zweiphasengemisch aus dem Fett und/oder Öl und dem Inertgas entsteht. Hierfür werden zweckmäßigerweise Zweistoffdüsen eingesetzt, die mit dem Fett und/oder Öl und dem Inertgas beaufschlagt werden. Auch der Einsatz eines Venturi-Injektors ist vorteilhaft. Zusätzlich können auch Prallteller verwendet werden.

Über eine Führung der Prozeßparameter, z.B. der Temperatur des heißen Fetts und/oder Öls, des Fettgehalts in der Inertgasatmosphäre, der Aufenthaltszeit der Lebensmittel im Fett- und/oder Ölnebel und gegebenenfalls des Drucks im Behandlungsraum, können verschiedene Produkteigenschaften der Lebensmittel weitgehend unabhängig voneinander eingestellt werden. Es können auch durch den zeitlichen Verlauf der Prozeßparameter, z.B. durch Einstellung eines Zeit-Temperaturprofils, verschiedene Garverfahren miteinander kombiniert werden.

Zweckmäßigerweise wird das Fett und/oder Öl von einer Fett- und/oder Ölvorratseinrichtung mindestens einer innerhalb des Behandlungsraums angeordneten Vernebelungseinrichtung zugeführt, wobei das Fett und/oder Öl vor der Vernebelung erhitzt wird. Beispielsweise kann das Fett und/oder Öl in der Fett- und/oder Ölvorratseinrichtung selbst erhitzt werden. Es ist aber auch möglich, das Fett und/oder Öl in Zufuhrleitungen zur Vernebelungseinrichtung oder in der Vernebelungseinrichtung selbst zu erhitzen. Dies hat den Vorteil, daß nur jeweils die benötigte Menge an Fett und/oder Öl erhitzt werden muß und die Temperaturregelung schneller und genauer erfolgen kann.

Gemäß einer bevorzugten Ausführungsform der Erfindung werden das Inertgas und das Fett und/oder Öl in einer gemeinsamen Zuleitung der Vernebelungseinrichtung zugeführt. Dadurch ist eine bessere und feinere Verteilung des Fettanteils im Nebel möglich. Der Inertgasstrom kann auch erhitzt werden.

Eine Weiterbildung des Erfindungsgedankens sieht vor, zusätzlich zu der Inertgaszufuhr zur Vernebelungseinrichtung über eine separate Einspeiseeinrichtung Inertgas in den Behandlungsraum einzuleiten.

Bevorzugt wird als Inertgas Stickstoff und/oder Kohlendioxid eingesetzt. Außerdem kann das Inertgas zusätzlich zur Schaffung der Inertgasatmosphäre im Behandlungsraum auch zur Inertisierung des Fett- und/oder Ölvorratsbehälters verwendet werden.

Überschüssiges Fett und/oder Öl wird zweckmäßigerweise in einer unterhalb der Lebensmittel angeordneten Sammeleinrichtung aufgefangen.

Insbesondere bei größeren Anlagen wird ein Fett- und/oder Ölkreislauf bevorzugt. Hierbei wird das in der Sammeleinrichtung aufgefangene Fett und/oder Öl wieder zur Vernebelungseinrichtung zurückgeführt. Zweckmäßigerweise wird dabei das Fett und/oder Öl bereits in der Sammeleinrichtung erhitzt.

In der Rückführung des in der Sammeleinrichtung aufgefangenen Fetts und/oder Öls zur Vernebelungseinrichtung erfolgt vorteilhafterweise eine Abtrennung von unerwünschten Begleitstoffen, z.B. Partikeln oder Verunreinigungen. Hierfür ist zweckmäßigerweise ein Filter oder Abscheider in die Rückführleitung eingeschaltet.

Um eine Anpassung der Fett- und/oder Ölnebeltemperatur an die jeweiligen Erfordernisse der Lebensmittel zu ermöglichen, ist die Vernebelungseinrichtung bevorzugt heiz- und/oder kühlbar ausgebildet.

Die Behandlung der Lebensmittel kann diskontinuierlich oder kontinuierlich erfolgen. Bei der diskontinuierlichen Variante werden z.B. die Lebensmittel auf einen innerhalb des Behandlungsraums angeordneten Träger aufgelegt und dort so lange im Fett- und/oder Ölnebel gehalten, bis der gewünschte Behandlungserfolg erreicht ist. Dann werden die Lebensmittel aus dem Behandlungsraum wieder herausgenommen. Bei der kontinuierlichen Ausführungsform werden die Lebensmittel z.B. auf ein Förderband aufgelegt und kontinuierlich durch den Behandlungsraum hindurchbewegt. Die Fördergeschwindigkeit des Förderbandes wird so eingestellt, daß sich die Lebensmittel auf dem Weg durch den Behandlungsraum genügend lange in dem Fett- und/oder Ölnebel aufhalten, um den gewünschten Behandlungserfolg zu erreichen.

Der Träger kann auch wendbar ausgebildet sein, so daß er von beiden Seiten mit zu behandelnden Lebensmitteln belegt werden kann. Eine andere Möglichkeit besteht darin, die Lebensmittel selbst auf dem Träger zu wenden.

Durch eine zusätzliche an den Behandlungsraum anschließende Oxidationsstufe ist gemäß einer Weiterbildung der Erfindung auch eine gezielte Oxidation der Lebensmittel zur Geschmacks- und Farbbildung möglich.

Das Verfahren läßt eine gezielte, weitgehend voneinander unabhängige Erzeugung folgender Produkteigenschaften der Lebensmittel zu: Farbe, Konsistenz, Gargrad, Oberflächenbeschaffenheit (z.B. Resche), Geruch, Biß und Angriff (Fettigkeit). Der Einsatz des heißen Fett- und/oder Ölnebels bewirkt eine gute Garung der Lebensmittel bei dennoch geringer Fettaufnahme. Dies wird dadurch erreicht, daß die Oberflächen der Lebensmittel durch die Benetzung mit dem heißen Fett- und/oder Ölnebel sich schnell verschließen und deshalb eine geringere Fettaufnahme erreicht wird. Die Erfindung ermöglicht eine Einstellung eines sehr breiten Temperaturspektrums des Fett- und/oder Ölnebels zur gezielten Behandlung der Lebensmittel. Vorteilhaft wirkt sich auch die gleichmäßige Benetzung der Lebensmittel mit dem Fett- und/oder Öl aus. Durch Steuerung der Prozeßparameter, z.B. Temperaturverlauf, Fettgehalt der Inertgasatmosphäre und Aufenthaltszeit der Lebensmittel im Fett- und/oder Ölnebel, ist die Intensität des Fritier- bzw. Bratgeschmacks genau einstellbar. Auch die Fettaufnahme des Produkts kann mit dem Verfahren eingestellt werden. Aufgrund einer sehr guten Fettausnutzung entsteht nur ein geringer Anfall an Abfallfett. Das Fett verdirbt in der Inertgasatmosphäre langsamer und es wird kein Fett für ein Fettbad benötigt.

Aufgrund der Möglichkeit einer definierten Behandlung der Lebensmittel können auch völlig neue Lebensmittelprodukte hergestellt werden.

Die Erfindung betrifft ferner eine Vorrichtung zur thermischen Behandlung von Lebensmitteln mit einem Behandlungsraum, in den die Lebensmittel einbringbar sind.

Vorrichtungsseitig wird die gestellte Aufgabe dadurch gelöst, daß eine Fett- und/oder Ölvorratseinrichtung vorgesehen ist, von der eine Fett- und/oder Ölleitung zu mindestens einer im Behandlungsraum angeordneten Vernebelungseinrichtung führt, wobei der Vernebelungseinrichtung eine Heizeinrichtung vorgeschaltet ist oder die Vernebelungseinrichtung selbst mit einer Heizeinrichtung versehen ist, und eine Inertgasversorgungseinrichtung mit dem Inneren des Behandlungsraumes in Verbindung steht.

Zweckmäßigerweise ist die Vernebelungseinrichtung im oberen Teil des Behandlungsraums angeordnet, während im unteren Teil des Behandlungsraumes eine Fett- und/oder Ölauffangeinrichtung vorgesehen ist, wobei oberhalb der Fett- und/oder Ölauffangeinrichtung ein Träger für die Lebensmittel angeordnet ist. Die Lebensmittel befinden sich also nicht in dem Fettbad in der Fett- und/oder Ölauffangeinrichtung, sondern oberhalb des Fettbades in dem Fett- und/oder Ölnebel.

Zur Ausbildung eines Fett- und/oder Ölkreislaufes ist vorzugsweise die Fett- und/oder Ölauffangeinrichtung über eine Rückleitung mit der Vernebelungseinrichtung verbunden. In diesem Fall weist die Fett- und/oder Ölauffangeinrichtung eine Heizeinrichtung zum Erhitzen des Fetts und/oder Öls auf.

Gemäß eine Weiterbildung des Erfindungsgedankens sind mehrere Vernebelungseinrichtungen vorgesehen, die an verschiedenen Stellen des Behandlungsraums angeordnet sind, so daß die Vernebelung von mehreren Seiten des Behandlungsraums ausgeht. Vorzugsweise sind die Vernebelungseinrichtungen so angebracht, daß die Lebensmittel von allen Seiten eingenebelt werden.

Im folgenden soll die Erfindung an Hand von in den Figuren schematisch dargestellten Ausführungsbeispielen näher erläutert werden.

Es zeigen
Figur 1 eine Anlage zur diskontinuierlichen Behandlung von Lebensmitteln
Figur 2 eine Anlage zur kontinuierlichen Behandlung von Lebensmitteln

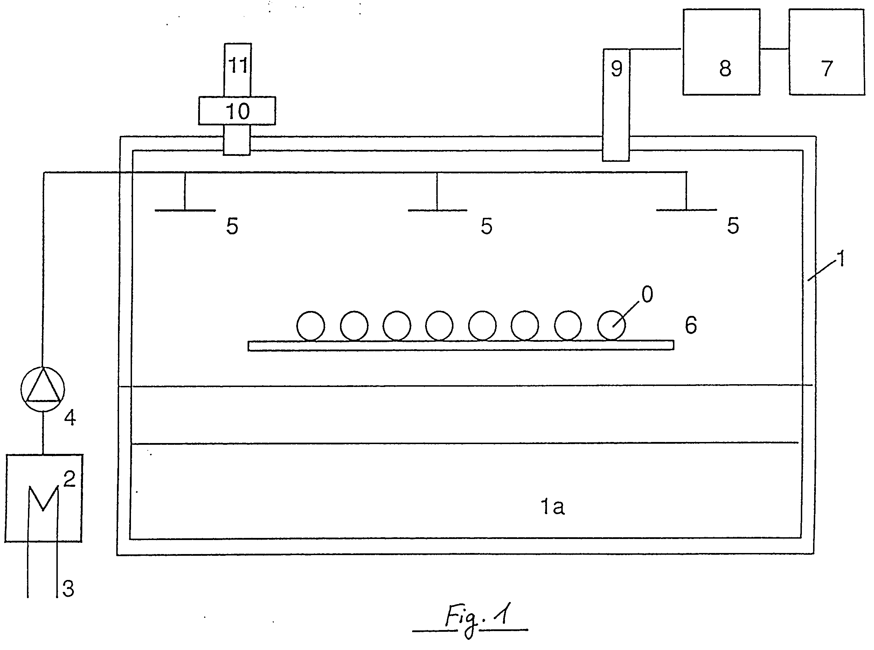

In Figur 1 ist mit 1 ein geschlossener Behandlungsraum bezeichnet, in den über eine nichtdargestellte verschließbare Öffnung Lebensmittel eingebracht werden können. Die Lebensmittel 0 werden auf einen Träger 6, der im Behandlungsraum angeordnet ist, aufgelegt. Im Fettvoratsbehälter 2 wird mittels einer Heizung 3 das Fett bis auf eine dem Fett und dem Lebensmittel angemessene vorgegebene Temperatur aufgeheizt und mittels einer Pumpe 4 zu den Vernebelungseinrichtungen 5 geleitet. Mittels der Vernebelungseinrichtungen 5 wird das Fett zu einem feinen Fettnebel zerstäubt, der sich im gesamten Inneren des Behandlungsraumes ausbreitet. Um die Entstehung von zündfähigen oder selbstzündenden Luft- Fettnebel- Gemischen zu verhindern, wird von einem Flüssig- Stickstoffbehälter 7 flüssiger Stickstoff einer Verdampfungseinrichtung und Gasregeleinrichtung 8 zugeführt und als gasförmiger Stickstoff über eine Inertgaseinspeisevorrichtung 9 in den Behandlungsraum 1 eingeleitet. Abgas wird über eine Absaugeinrichtung 11, die einen Fettabscheider aufweist, abgeführt. Überschüssiges Fett wird in einer Fettaufnahmewanne 1a, die unterhalb des Trägers 6 angeordnet ist, aufgefangen. Zu diesem Zweck kann z.B. das Bodenteil des Behandlungsraumes zu einer Fettauffangwanne geformt sein. Die Lebensmittel 0 werden so lange in dem Fettnebel gehalten, bis die gewünschten Produkteigenschaften erreicht sind. Mittels der Heizeinrichtung 3 und der Pumpe 4 können Temperatur und Fettgehalt der Inertgasatmosphäre im Behandlungsraum 1 entsprechend den gewünschten zu erzielenden Produkteigenschaften eingestellt werden.

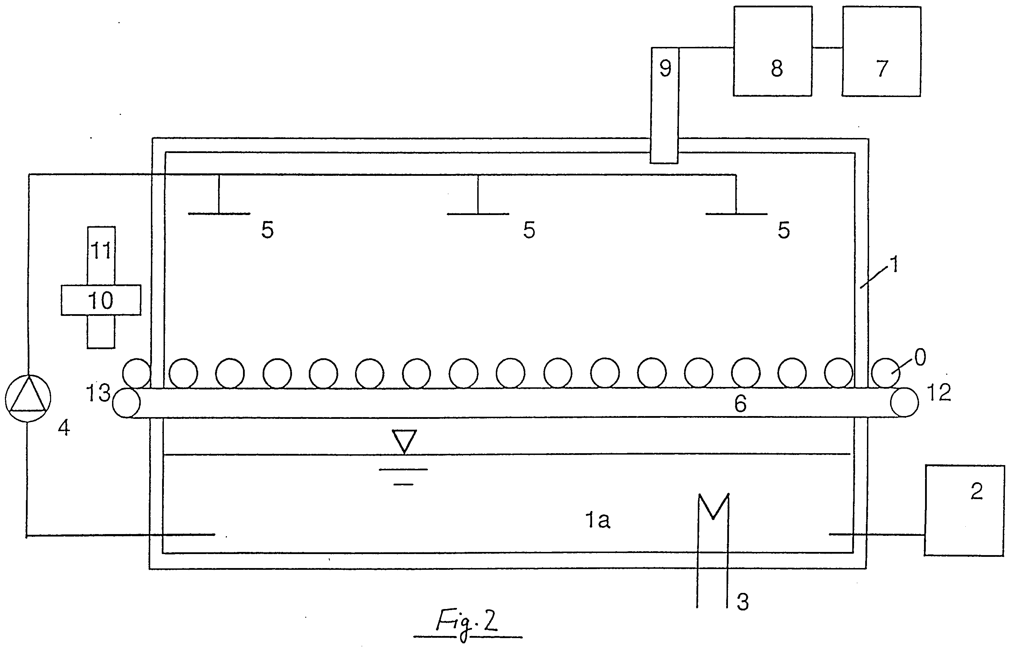

Die in Figur 2 gezeigte Anlage unterscheidet sich von der in Figur 1 dargestellten Anlage im wesentlichen darin, daß sie auf eine kontinuierliche Betriebsweise ausgelegt ist. Dieselben Anlagenteile sind mit denselben Bezugszeichen wie in Figur 1 bezeichnet. Im Gegensatz zu der in Figur 1 dargestellten Anlage ist zur kontinuierlichen Beschickung des Behandlungsraums 1 mit den Lebensmitteln 0 ein Förderband 6 vorgesehen, das die Lebensmittel 0 von der Produktaufgabe 12 zur Produktausgabe 13 befördert. Die Fördergeschwindigkeit des Förderbandes 6 wird so eingestellt, daß sich die Lebensmittel 0 so lange im Fettnebel im Behandlungsraum 1 aufhalten, daß die gewünschten Produkteigengschaften erreicht werden. Ein weiterer Unterschied zu der in Figur 1 dargestellten Anlage besteht darin, daß ein Fettkreislauf von der Fettauffangwanne 1a zu den Vernebelungseinrichtungen 5 vorgesehen ist. Die Fettauffangwanne 1 wird aus dem Fettvorratsbehälter 2 mit frischem Fett versorgt. Die Aufheizung des Fetts erfolgt bereits in der Fettauffangwanne 1a mittels der Heizung 3. Die Abgasabsaugung 11 mit dem Fettabscheider 10 ist in Nähe der Produktausgabe 13 angeordnet.

## Patentansprüche

1. Verfahren zur thermischen Behandlung von Lebensmitteln (0), wobei die Lebensmittel (0) in einen Behandlungsraum (1) eingebracht und dort mit heißem Fett und/oder Öl in Kontakt gebracht werden, **dadurch gekennzeichne**t, daß im Behandlungsraum (1) ein homogener Nebel aus dem heißen Fett und/oder Öl und einem Inertgas oder Inertgasgemisch eingestellt wird und das Lebensmittel (0) während der thermischen Behandlung in dem Nebel gehalten wird.

2. Verfahren nach Anspruch 1, dadurch gekennzeichnet, daß das Fett und/oder Öl von einer Fett - und/oder Ölvorratseinrichtung (2) mindestens einer innerhalb des Behandlungsraums angeordneten Vernebelungseinrichtung (5) zugeführt wird, wobei das Fett und/oder Öl vor dem Vernebeln erhitzt wird.

3. Verfahren nach Anspruch 2, dadurch gekennzeichnet, daß das heiße Fett und/oder Öl und das Inertgas oder Inertgasgemisch gemeinsam der Vernebelungseinrichtung (5) zugeführt werden.

4. Verfahren nach einem der Ansprüche 1 bis 3, dadurch gekennzeichnet, daß als Inertgas Stickstoff und/oder Kohlendioxid eingesetzt wird.

5. Verfahren nach einem der Ansprüche 1 bis 4, dadurch gekennzeichnet, daß überschüssiges Fett und/oder Öl in einer unterhalb der Lebensmittel (0) angeordneten Sammeleinrichtung (1a) aufgefangen wird.

6. Verfahren nach Anspruch 5, dadurch gekennzeichnet, daß das in der Sammeleinrichtung (1a) aufgefangene Fett und/oder Öl in der Sammeleinrichtung (1a) erhitzt und wieder der Vernebelungseinrichtung (5) zugeführt wird.

7. Verfahren nach einem der Ansprüche 1 bis 6, dadurch gekennzeichnet, daß die Lebensmittel (0) kontinuierlich durch den Behandlungsraum (1) hindurchgeführt werden.

8. Vorrichtung zur thermischen Behandlung von Lebensmitteln (0) mit einem Behandlungsraum (1), in den die Lebensmittel (0) einbringbar sind, dadurch gekennzeichnet, daß eine Fett- und/oder Ölvorratseinrichtung (2) vorgesehen ist, von der eine Fett- und/oder Ölleitung zu mindestens einer im Behandlungsraum (1) angeordneten Vernebelungseinrichtung führt, wobei der Vernebelungseinrichtung (5) eine Heizeinrichtung (3) vorgeschaltet ist oder die Vernebelungseinrichtung (5) selbst mit einer Heizeinrichtung versehen ist, und eine Inertgasversorgungseinrichtung (7) mit dem Inneren des Behandlungsraumes (1) in Verbindung steht.

9. Vorrichtung nach Anspruch 8, dadurch gekennzeichnet, daß die Vernebelungseinrichtung (5) im oberen Teil des Behandlungsraums (1) angeordnet ist und im unteren Teil des Behandlungsraums (1) eine Fett- und/oder Ölauffangeinrichtung (1a) vorgesehen ist, wobei oberhalb der Fett- und/oder Ölauffangeinrichtung ein Träger (6) für die Lebensmittel (0) angeordnet ist.

10. Vorrichtung nach Anspruch 9, dadurch gekennzeichnet, daß die Fett- und/oder Ölauffangeinrichtung (1a) über eine Rückleitung mit der Vernebelungseinrichtung (5) in Verbindung steht.

11. Vorrichtung nach Anspruch 10, dadurch gekennzeichnet, daß die Fett- und/oder Ölauffangeinrichtung (1a) eine Heizeinrichtung (3) aufweist.
